Europäisches Patentamt

European Patent Office

Office européen des brevets

(11) Publication number: 0 463 752 A2

# EUROPEAN PATENT APPLICATION

(21) Application number: 91305093.6

(22) Date of filing: 05.06.91

(51) Int. Cl.⁵: G06F 7/04

(30) Priority: 29.06.90 US 545856

(43) Date of publication of application:
02.01.92 Bulletin 92/01

(84) Designated Contracting States:
DE FR GB NL

(71) Applicant: DIGITAL EOUIPMENT
CORPORATION
146 Main Street
Maynard, MA 01754(US)

(72) Inventor: DeRoo, John E.
93 Brigham Street
Marlborough, Massachusetts 01752(US)
Inventor: Frame, Robert C.
35 Arch Street
Westboro, Massachusetts 01581(US)
Inventor: Rub, Bernardo
45 Longfellow Road
Shrewsbury, Massachusetts 01545(US)

(74) Representative: Goodman, Christopher et al
Eric Potter & Clarkson St. Mary's Court St.
Mary's Gate
Nottingham NG1 1LE(GB)

(54) Pattern matching circuit.

(57) The invention is a pattern matcher which (i) compares two or more multi-symbol data patterns, symbol-by-symbol, and detects any mis-matches, or errors, (ii) combines into a relatively small number of encoded bits information relating to the number of errors, and (iii) examines a single encoded bit to determine if the two patterns "match", i.e., if they differ by less than a predetermined number of symbols, or error threshold. The invention further includes a multi-bit output signal which may be used to determine, for patterns which match, the actual number of errors.

FIG. I

## FIELD OF INVENTION

The invention relates generally to data synchronization and more particularly to pattern matching.

## BACKGROUND OF THE INVENTION

Autocorrelation, or pattern matching, is a vital part of data synchronization, that is, synchronization of two system components which are transferring or transmitting data between them. For example, a computer system which stores data on mass storage devices, e.g., disk or tape drives or optical storage devices, must operate the storage devices and read and/or write devices (read/write devices) in synchronism. Similarly, a communications system must operate data transmitters and receivers in synchronism. Otherwise, the systems can not properly transfer, demodulate or interpret the data.

Computer systems typically store timing and synchronization patterns, referred to as preambles and synchronization characters, at the start of data sectors or blocks to enable the read/write devices to synchronize to the operations of the drives and/or the stored data. Similarly, the communications systems typically transmit preambles and synchronization characters before the data to enable receivers to synchronize to the transmission. The preambles and synchronization characters are patterns of ONES and ZEROS which are arranged to enable a read/write device or a receiver to determine data decode boundaries, such as bit, byte, word, etc., boundaries. Typically, the preambles are used to determine the bit boundaries and the synchronization characters are used to determine the byte, word etc. boundaries.

Before a receiver or a read/write device can make use of a preamble and a synchronisation character, it must find them. Thus the receiver or read/write device must find in the stored or transmitted data a pattern which "matches" the preamble and then find nearby a pattern which matches the synchronization character. Typically, two patterns match, or are considered to be the same, if they differ by fewer than a predetermined number of symbols or bits. If a perfect correspondence between the patterns is required, any error in the preamble or synchronization character would disrupt a data retrieval or transmission operation. Accordingly, the receiver or read/write device uses an autocorrelator, or pattern matcher, to compare the two patterns, count the number of corresponding bits or symbols which do not match, and detect a pattern match if there are fewer than the predetermined number of mis-matches, or errors.

Prior technology pattern matchers use shift registers and cascaded adders to compare the various patterns and count the number of errors. These pattern matchers typically shift the data symbols into a shift register and compare them with the pattern symbols, for example, by exclusive-OR'ing the corresponding symbols. The result of the comparison is a multi-bit "error" pattern with ZEROS in the positions which correspond to matching symbols and ONES in the positions which correspond to non-matching symbols. The cascaded adders then add together, or count, the number of ONES in the error pattern to determine if the patterns match. This adding or counting step is relatively slow due to carry propagation delays. Further, it requires that the pattern matcher include a relatively large number of logic gates, which makes the circuit relatively complex and slows the computation due to the delays associated with each gate.

It is desirable to find and synchronize to preambles and synchronization characters quickly. Otherwise, transmitted or stored data may be misinterpreted or lost, or the systems may require re-transmission or re-reading of the data, all of which slows the flow of data. As data transmission rates increase, due to improvements in data processing and data transmission systems, fast and reliable pattern matchers are becoming more and more important. Also, as the transmission rates increase errors caused by interference in the channels tend to increase, and thus, pattern matchers which are fault tolerant are becoming more and more critical to synchronization.

## SUMMARY OF THE INVENTION

The invention is an improved pattern matcher which (i) compares two multi-symbol data patterns, symbol-by-symbol, and detects any mis-matches, or errors, (ii) combines into a small number of encoded bits information relating to the number of errors, and (iii) examines one of the encoded bits to determine if the two patterns "match", that is, if they differ by less than a predetermined number of symbols, or error threshold, "t." The invention further includes a multi-bit output signal which may be used to determine either the actual number of errors or the approximate number of errors, as required, if there are fewer than the threshold.

Basically, the pattern matcher condenses information relating to the number of errors into one multi-bit code word in which each bit corresponds to a "group" of errors. For example, the least significant bit of the code word may correspond to 1 or 2 errors, the next bit to 3, 4 or 5 errors, and so forth. The most significant bit corresponds to any number of errors above the error threshold, t (t>5 in this example). The pattern matcher thus examines the most significant code word bit to determine if the patterns match. The significance of the various error groups represented by the other code word bits is discussed below.

## BRIEF DESCRIPTION OF THE DRAWINGS

The invention will be pointed out with particularity in the appended claims. The above and other advantages of the invention may be better understood by referring to the following description taken in conjunction with the accompanying drawings, in which:

Figure 1 is a block diagram of a pattern matcher constructed in accordance with the invention, and

Figure 2 is a block diagram of the pattern matcher of Figure 1 configured to determine if a multi-bit data pattern matches as a fixed multi-bit pattern.

## DETAILED DESCRIPTION

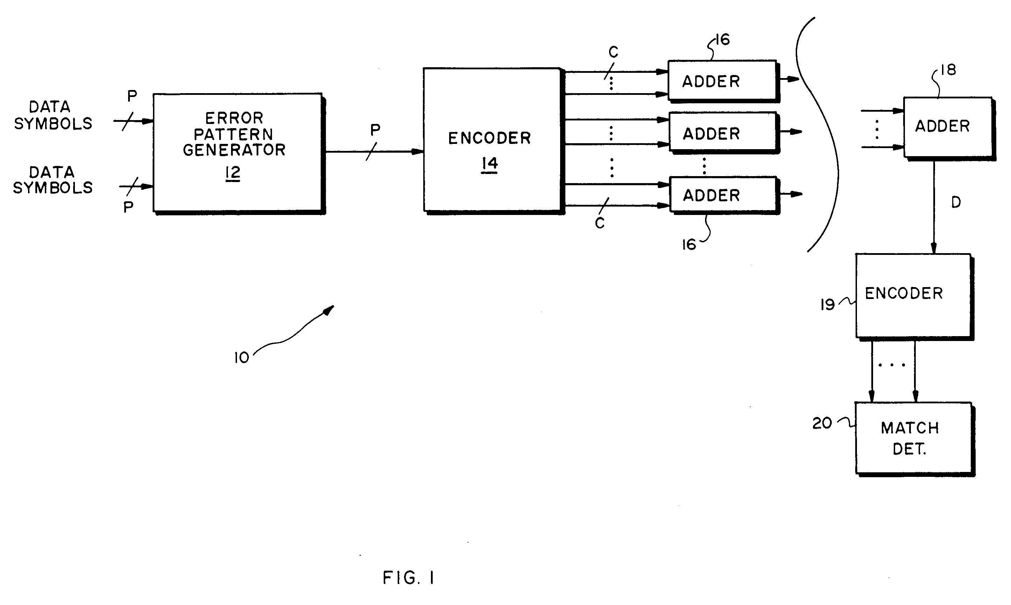

Figure 1 depicts a pattern matcher 10, which includes an error pattern generator 12, encoder 14, adders 16-18 and a match detector 20. The pattern matcher optionally includes a second encoder 19, which further encodes the sum generated by adder 18. The error pattern generator 12 compares corresponding symbols in two "p"-symbol data patterns to determine if the patterns match. In this example, the symbols are bits, and thus, the patterns are p bits long. The error pattern generator 12 may compare the corresponding symbols in more than two patterns, for example, to determine if several patterns match, however, we discuss below examples of two-pattern matching.

If the patterns match exactly, that is, if all of the corresponding bits are the same, the error pattern generator 12 produces a p-bit all ZERO "error" pattern. Otherwise, the error pattern generator 12 produces a p-bit error pattern with ZEROS in the positions of the matching bits and ONES in the remaining positions. The ONES thus indicate mis-matches, or errors.

The error pattern generator 12 supplies the p-bit error pattern to encoder 14, which separates it into "m" multi-bit segments. Encoder 14 then encodes each of the m segments to form a set of m code words. The encoder 14 may include m modules of encoding logic, one for each code word, such that the various segments can be encoded in parallel.

Each of the code words generated by encoder 14 contains "c" bits and each of the bits corresponds to a particular number of errors associated with the segment, that is, to the number of ONES in the segment. For example, if a code word has 4 bits ($c = 4$), a ONE in the first bit position indicates that there is at least 1 error, a ONE in the second bit position indicates that there are at least 2 errors, and so forth. Thus, if there is a ONE in any bit position, there are ONES in all of the less significant bit positions. The locations of the errors, that is, the positions of the particular mis-matched bits in the data pattern, are not important for pattern matching. Accordingly, such information is not retained.

The encoder 14 applies the m code words to a first bank of adders 16. Each adder 16 adds two or more code words to generate a sum, $S_1$. The number and positions of the ONES in each sum, $S_1$, corresponds to the number of errors in the associated code words. The sum $S_1$ consists of $c + 1$ bits if $c \leq t$, and thus, the adders 16 need not be cascaded to preserve the error count. Accordingly, the error count is entirely represented by the bits of the sum $S_1$.

A second bank of adders 16 adds two or more of the $S_1$ sums, to produce sums, $S_2$. A next bank of adders adds these sums, to produce sums, $S_3$, and so forth until an adder 18 generates a "d"-bit total sum, $S_D$. Each of the bits in the sum, $S_D$, relates to a predetermined number of errors (bit mis-matches), or error group. The most significant bit of the code word relates to any number of errors above the error threshold, t. Accordingly, if this bit is a ONE, it indicates that the data patterns do not match. Thus the match detector 20 need only examine this one bit to detect a match.

The match detector 20 in this embodiment may match patterns using different error thresholds. For example, if a match with very few errors is required due to a high tolerance requirement, the match detector examines a less significant bit, such as, a bit representing "at least t-r" errors, where $r \leq t$ and t-r is the lower error threshold. Thus, for a lower error threshold of 2, the detector 20 detects a mis-match if the code word bit is set which indicates the 3, 4, or 5 error group.

If the pattern matcher is being used to find a synchronization character, it may use lower thresholds in an attempt to find the pattern. If, for example, a synchronization character cannot be found with 2 or fewer errors, it may look for one with 3 or fewer errors, and so forth. If these lower thresholds are required often to find the pattern, the system controller (not shown) may determine that the storage medium or communications channel, as appropriate, is deteriorating. The controller can then take steps to correct the situation before the associated data are irretrievable due to an inability to synchronize to them.

The optional encoder 19 may be used to select certain bits of the sum $S_D$ or encode certain bits, as appropriate, before the bits are sent to the match detector 20. For example, if various thresholds are used to search for the synchronization character, the encoder 19 encodes the sum such that each bit of the sum represents a different threshold. Thus if the thresholds are t, $t-r_1$, $t-r_2$, and so forth, the bits applied to the match detector represent "more than t", "more than t-r errors", "more than $t-r_2$ errors", etc.

Alternatively, the match detector 20 and/or the controller may store an indication of the error group associated with a given sector or block of the storage medium or a given channel. Thereafter, it compares the stored indicator with the indicator associated with newly accessed or received data from the same sector or block of the medium or the same channel to determine if more errors are found. If the new indicator corresponds to a greater number of errors, the system controller can take the appropriate steps to preserve the preamble or synchronization character or alert the system of the situation, as appropriate. The system can thus correct the problem before the data preamble or synchronization character are lost and the associated data are irretrievable.

The encoder 19 may then be used to encode the sum $S_D$ to form a symbol which is in a format which can easily be stored by the match detector 20 or the system controller. For example, if the controller requires data bytes, the encoder 19 encodes the 5-bit sum $S_D$ to form a corresponding 8-bit byte.

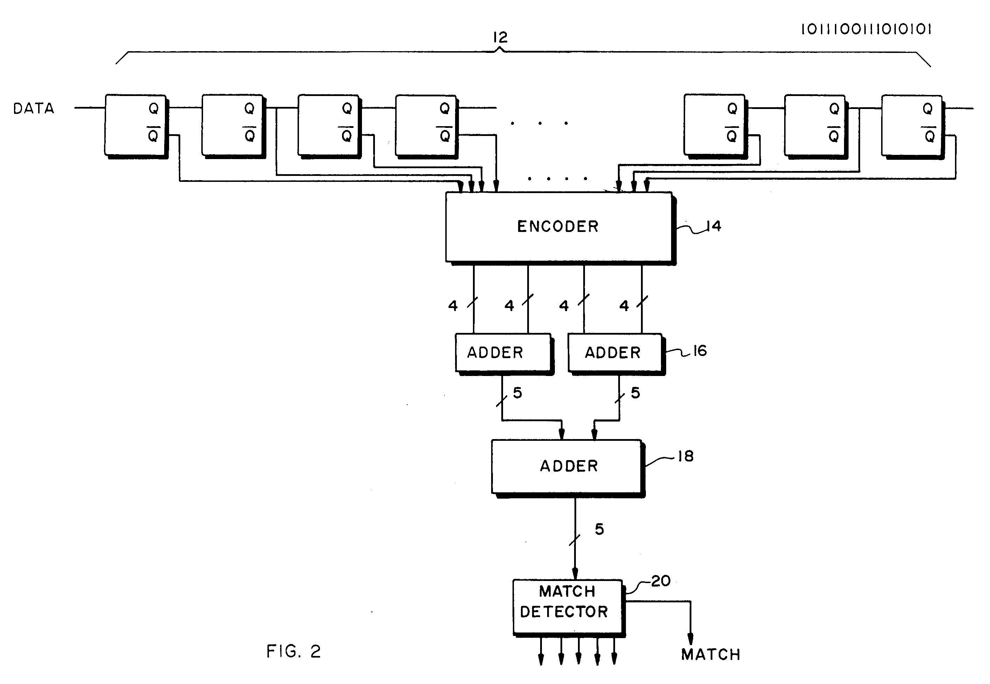

Figure 2 depicts a pattern matcher 10 which is designed specifically to determine if a 16 bit data pattern matches a fixed 16-bit pattern, for example, a 16-bit synchronization character. The pattern matcher 10 determines that the patterns match if they differ by fewer than 5 bits. In this example, the synchronization character pattern is 1011100100101000.

The error pattern generator 12 in this embodiment consists of 16 serially connected flip-flops. The flip-flops produce signals corresponding to the bits applied to their Q output lines and signals which are the complement of the bits on their "Q-bar", or complementary, output lines. The data are shown in the drawing as serially entering the flip-flops. However, the flip-flops may be loaded in parallel, as appropriate.

The flip-flops are connected to the encoder 14 in accordance with the synchronization character pattern -- the flip-flops corresponding to the positions of the ZEROS in the pattern have their Q output lines wired to the encoder 14, and the flip-flops corresponding to the positions of the ONES in the pattern have their complementary, or Q-bar, output lines wired to it. Thus each flip-flop supplies to the encoder 14 a ZERO when it receives a matching data bit and a ONE when it receives an erroneous data bit.

If the comparator receives the following 16 data bits:
1110000100100000
it compares them to the synchronization character pattern:
1011100100101000
and produces the following 16-bit error pattern:
0101100000001000

The encoder 14 receives the error pattern and separates it into four 4-bit segments (m = 4):
0101 1000 0000 1000

It then encodes the segments and generates for each a 4-bit code word (c = 4) with (i) a ONE in the bit location corresponding to the number of errors in the associated 4-bit segment, (ii) ZEROS in the more significant bit positions, and (iii) ONES in the less significant bit positions:

| segment | → | code word |
|---------|---|-----------|
| 0101 | → | 0011 |
| 1000 | → | 0001 |
| 0000 | → | 0000 |
| 1000 | → | 0001 |

The encoder 14 then supplies the code words to the adders 16. These adders 16 add the code words two-by-two to produce 5-bit sums, $S_1$:

0011 + 0001 = 00111
0000 + 0001 = 00001

Each asserted code word bit indicates that the associated segments contain a particular number of errors. Thus the leading ONE in the code word 000111 indicates that there is in the associated segments, at least, the largest number of errors associated with the third most significant bit position. In this example, the bit position corresponds to three errors. The ZERO in the second most significant bit position indicates that the segments do not contain any more than the three errors. Similarly, the ONE in the other sum indicates that there is at least the number of errors associated with the least significant bit position, which in this example is one error. The ZERO in the next most significant bit position indicates that the segments do not contain any more errors.

The adders 16 supply these sums to the adder 18 which adds the sums to produce a 5-bit sum $S_D$ = 01111 with ONES in the bit positions corresponding to the appropriate error groups. The bit position of the most significant ONE in the sum $S_D$

indicates that the data bits contain a maximum of 4 errors, and thus, that the number of errors does not exceed the threshold.

The adder 18 supplies the code word $S_D$ to the match detector 20, and the detector asserts its match signal after determining that the most significant bit is a ZERO. If the data bits and the fixed pattern do not match in 5 or more locations, that is, if the number of errors is greater than or equal to the error threshold of 5, the adder/encoder 20 produces the code word 11111. When the match detector 18 receives this code word it examines the most significant bit and, finding a ONE there, it does not assert its match signal.

The match detector 20 may also be used to find a pattern using a lower error threshold, as may be required during testing. The detector 20 examines the second or third most significant bits of the sum, $S_D$, as appropriate, for error thresholds of 4 and 3 in this example. As discussed above, a system controller may monitor the various thresholds used to find the patterns in order to determine if the stored synchronization patterns are deteriorating. If the patterns are deteriorating, the controller may then retrieve the data and store it in another section of the medium before one or two more errors in the synchronization character render it unrecognizable and the associated data irretrievable.

Consider another example, where the error threshold is greater than 5 errors, for example, 9 errors. The encoder 19 encodes the sum $S_D$ to produce a 5-bit code word with the most significant bit corresponding to 9 or more errors and the remaining bits corresponding to various groups of 8 or fewer errors. For example, the least significant bit may correspond to an error group including 1 or 2 errors, the next bit to an error group including 3, 4 or 5 errors, and so forth. The encoder 19 either combines several bits of the sum $S_D$ which correspond to various numbers of errors, or it selects certain of the bits in order to produce an appropriate encoded sum to send to the detector 20.

The encoded sum is then sent to the match detector 20. The detector 20 looks at the bit corresponding to the error threshold to determine if the data bits match the fixed pattern, and to the less significant bits to determine if the stored pattern is deteriorating.

In summary, the pattern matcher 10, at various processing stages, combines into a relatively small number of encoded bits the information which is necessary to determine if the patterns match and/or if the associated storage medium or communications channel is deteriorating. It thus reduces the amount of information which must be manipulated by succeeding processing stages without reducing its ability to detect matching patterns. The pattern matcher 10 thus requires fewer processing stages and/or fewer adders per stage than prior pattern matchers, and it determines if two patterns match relatively quickly.

The foregoing description has been limited to two embodiments of this invention. It will be apparent, however, that variations and modifications may be made to the invention, with the attainment of some or all of the advantages of the invention. Therefore, it is the object of the appended claims to cover all such variations and modifications as come within the true spirit and scope of the invention.

## Claims

1. A pattern matcher comprising:

    A. comparison means for comparing symbol-by-symbol two or more data patterns and producing a multibit error pattern that indicates which particular symbols do not match;

    B. an encoder for --

    i. separating said error pattern into m segments, and

    ii. encoding each of said segments to produce m corresponding multi-bit code words, with each bit location of each of said code words being associated with a particular number of errors in the corresponding segment, said encoder setting the bits of said code words such that the position of the highest order set bit in a code word indicates the number of errors in the associated segment;

    C. combining means for combining said code words to form a multi-bit sum total, with each bit location of said sum total being associated with a range of numbers of errors, said combining means setting the bit corresponding to the range encompassing the number of errors in the associated segments; and

    D. a detector for indicating that the patterns match by determining that the sum total bit corresponding to a predetermined minimum pattern-matching error threshold is not set, said detector means detecting that the patterns do not match when said bit is set.

2. The pattern matcher of claim 1, wherein said pattern matcher further includes a second detector means for detecting deterioration of a storage medium on which a predetermined pattern is stored, said second detector examining the state of the bits which are above a predetermined threshold in a number of sum totals and indicating deterioration of the storage medium if the number of said sum totals with such bits set is above a predetermined number.

3. The pattern matcher of claim 1, wherein said combining means sets a single bit in said code word sum for all numbers of errors above a predetermined maximum pattern-matching threshold.

4. The pattern matcher of claim 1, wherein said detector indicates a match if a bit of said sum total which corresponds to an error threshold above said predetermined minimum pattern matching threshold is not set when the bit corresponding to said predetermined minimum pattern matching threshold is set in a predetermined number of previously generated sum totals.

FIG. I

EP 0 463 752 A2

FIG. 2